# EUROPEAN PATENT SPECIFICATION

(11) **EP 4 226 087 B1**
(45) Date of publication and mention of the grant of the patent: **07.05.2025**
(21) Application number: 20956864.1
(22) Date of filing: 07.10.2020
(51) Int. Cl.: F24C 3/08, F24C 15/10

(54) **A HOB WITH GRATE HAVING FLAT FRAME**
KOCHFELD MIT ROST MIT FLACHEM RAHMEN
PLAQUE DE CUISSON DOTÉE D'UNE GRILLE À CADRE PLAT

(43) Date of publication of application: 16.08.2023
(73) Proprietor: Mamur Teknoloji Sistemleri San. A.S., 34590 Silivri/Istanbul (TR)
(72) Inventor: YANIK, Omer, 34590 Silivri/Istanbul (TR); KIRANLIOGLU, Birant Ali, 34590 Silivri/Istanbul (TR); ALATAS, Elif Seyda, 34590 Silivri/Istanbul (TR); UNSAL, Cem Burak, 34590 Silivri/Istanbul (TR)
(86) International application number: PCT/TR2020/050927
(87) International publication number: WO 2022/075930

(56) References cited:
- EP-A2- 0 100 224
- JP-A- 2003 294 249
- JP-A- 2004 150 670
- KR-A- 20120 033 236
- KR-B1- 101 196 942
- KR-U- 20090 010 892
- US-A- 5 628 302
- US-B2- 7 291 009

## Description

### TECHNICAL FIELD

The invention relates to a hob comprising a single hob grid disposed on the hob to support the pan at a safe cooking distance to a burner.

### BACKGROUND OF THE ART

In order to cook with a gas hob, a pan is disposed on a burner provided on the top plate at a height defining a flame distance. A grate is provided on a hotplate and the pan rest on the grate, aligned on the respective burner. The hob has support legs rising from the hob to the burner. In one embodiment, the support leg of the grate is in the form of a frame surrounding the entire hob and grate bars extending from the frame to each burner. In another embodiment, the frame of the single hob grill around the burner is provided to surround the periphery with a circular frame. It has an inverted L-like form rising from the frame ring with the support legs facing each other. Each support leg extends upwards at equal height and bends towards each other, forming a supporting portion in a plane extending from its free ends parallel to the top plate.

EP2564121 discloses a gas hob with a heat shield and a hob with at least one gas burner on a tempered glass or glass ceramic cooktop. In the hob, the heat shield is rectangular in shape and the hob includes a frame that attaches shape to the heat shield in the polygonal flat disc structure to protect the hob thermally. Further relevant prior art is given in KR20120033236 A and US7291009 B2.

### BRIEF DESCRIPTION OF THE INVENTION

The object of the invention is to increase the burner operating performance in hob with a single grate and a heat shield around the burner.

In order to achieve the said objective, the invention a hob is comprising a bowl-shaped burner body disposed in an opening on a top plate and a flame spreader is extending radially outwardly on the burner body so as to provide an air intake corridor with the top plate; a grate having a frame that surrounds the burner body at a distance and at least one carrier arm rising from the frame and extending towards the flame spreader; a flat heat shield arranged as a spacer between the burner body and the frame. The frame is in the form of a flat plate and thickness of the frame is surrounding the heat shield from its periphery is arranged to equal or smaller than the height of the heat shield. The frame in the form of a flat thin plate does not create any obstacles in front of the air intake corridor. In this way, the burner combustion efficiency is high, and the emission values of the hob are reduced. In a possible embodiment, the burner body is an injector holder in the form of a cup and connected to the injector burner body with gas line connection. Layout can be arranged vertically or horizontally.

In a preferred embodiment of the invention, a mounting section at the bottom of the carrier arm is extending from the top of the frame to the outer edge in an L-like form. In this way, the mounting section contact surface between the frame and the carrier arm is increased by ensuring that the mounting section wraps around the frame both from the top and from the outside. In an alternative embodiment, it is also possible for the mounting section of the carrier arm to extend to the inner edge of the frame.

A preferred embodiment of the invention includes a base following the mounting section gradually rests at least partially on the top plate. The base allows the support arm to be supported both by the frame and directly by the top plate.

In a preferred embodiment of the invention, the carrier arm is in the form of a solid thin and flat plate rising perpendicular to the frame. The flat and vertical plate carrier arm provides the least intersection possibility with the flame crown formed by the flame spreader.

In a preferred embodiment of the invention, the thickness of the carrier arm is substantially equal to the thickness of the frame. In this way, it is possible to obtain support arms, for example, from the same sheet metal from which the frame is produced.

According to the invention, a flat upper wall of the frame of the grate is aligned with the upper wall of the heat shield to extend in the same horizontal plane. In this case, intake air pass over the frame extending from the bottom of the air intake corridor without disturbed by any surface deformation that will reduce the pressure of the radially inwardly moving ambient air.

In a preferred embodiment of the invention, the flame spreader comprises a rim extending parallel to the radial inward air intake corridor to confine from the top, through which primary air pass through between the flame spreader and heat shield. The rim part extends inward on the flame spreader and provides a corridor with air passage on the heat shield. The ambient air cools and reduces thermal deformations the heat shield by passing over.

In a preferred embodiment of the invention, a mounting part of the heat shield is aligned into a mounting hole provided on a flange of the burner body extending to the opening such that a fixing element is able to be inserted. In this way, when the burner body is inserted into the opening, it is possible to mount the heat shield on the top plate over the flange.

In a preferred embodiment of the invention, the heat shield is having a stepped outer edge fitted from a lower wall to the frame in a covering manner. Since the frame rest on the heat shield, it is ensured that the frame hides the mounting section of the heat shield and the top plate.

In a preferred embodiment of the invention, an elevated portion equal to the thickness of the frame is provided between the outer edge and the planar upper wall. In this way, when the frame is disposed on the outer edge from the lower wall, it is disposed on the same plane with the upper edge from the adjacent edge with the elevation part.

In a preferred embodiment of the invention, the heat shield is formed from a metal plate. The metal plate acts as a wing and ensures that the heat emitted from the burner body is transferred to the ambient by convection. Since the top plate is not directly adjacent to the burner body, it is removed from the high temperature region formed in the neighbouring part.

In a preferred embodiment of the invention, the cooktop includes ceramic or toughened glass. In this way, when the burner body is disposed in its opening, protected from the negative effects of temperatures with its heat shield.

### BRIEF DESCRIPTION OF THE FIGURES

Figure 1 is the perspective view of a representative embodiment of the hob, with a single grate disposed on the glass ceramic top plate.
Figure 2 is a cross-sectional illustration of the embodiment shown in Figure 1.

### DETAILED DESCRIPTION OF THE INVENTION

In this detailed explanation, the subject development of the invention is explained without any limitation and only with reference to examples to better explain the subject.

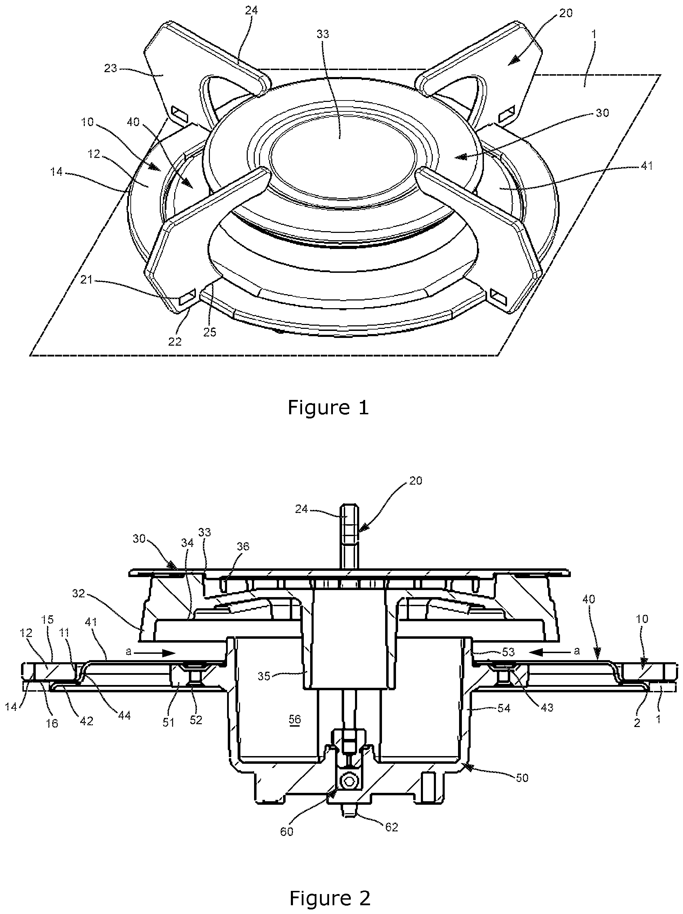

In Figure 1, a flame spreader (30) on a burner body (50) disposed in a circular opening on a hard glass cooktop (1) and a hob grate (10) with four carrier arms (20) around it is shown in perspective. The flame spreader (30) is in a cylindrical form and there is a flat metal cover (33) on top part. A heat shield (40) extending radially outwards from the opening (2) rest on the top plate (1). The heat shield (40) is formed by pressing a flat metal plate and is one piece in annular structure. A hob grate (10) with a rectangular flat frame (12) is removably seated on the junction between the heat shield (40) and the hob (1). The heat shield (40) is in a circular gradual form and an elevated portion (44) provided by the outer stage part and an inner edge (11) of the frame (12) are adjacent to each other. Four carrier arms (20) perpendicular to the frame (12) facing each other are mounted on the frame (12) from a corresponding mounting section (25) in the lower part of the frame (12) in a way that makes an angle of 90 degrees. The support arm (20) has an L-like form with its long arm extending above it at a distance from the cover (33). The short arm forms a lifting arm (23) and raises a long support extension (23) parallel to the cooktop (1) at a distance, higher than the height of the cover (33). The lower part of the lifting arm (23) has a flat base (22) that fits directly onto the hob (1). The base (22) is adjacent to the mounting section. A through hole (21) is provided at the top of the base (22) . A silicone or rubber foot (not shown) can be passed through the hole (21) to support the base (22). An outer edge (14) in the same form as the inner edge (11) of the frame (12) faces outward, forming a step on the top plate (1). The upper wall (15) of the frame (12) and the upper wall (41) of the heat shield (40) adjacent to it are provided in a same plane parallel to and above the top plate (1).

In Figure 2, the hob is shown in cross-section. The opening (2) is formed by making a circular hole on the cooktop (1), which is a toughened glass plate structure. The aluminum burner body (50) in the form of a cup is disposed in the opening (2) with its opening is facing upwards. An injector (60) provided in the base is disposed vertically in an inner chamber (56) surrounded by the burner body (50). The injector (60) is connected to a gas inlet (62) at its lower end facing outward. A flange (51) extends radially outward on the upper part of the burner body (50). Opposite mounting holes (52) are drilled on the flange (51). The heat shield (40) is formed from metal sheet and surrounds the mouth (53) of the burner body (50) from an inner edge (46). A mounting portion (43) adjacent to the inner edge (46) is collapsed into the mounting hole (52) aligned. Thus, a connection element, for example, secure the heat shield (40) from the inner edge (46) to the burner body (50) by passing through the mounting hole (52) in such a way that its head fits into the screw mounting part (43). The heat shield (40) extends radially outwards with an upper wall (41) that is flat and parallel to the top plate (1) and covers the opening (2) between its inner edge (46) and an opposite outer edge (42). The outer edge (42) is in a stepped structure and bends vertically downwards as much as the thickness of the frame (12) and forms an elevated portion (44). The lower wall (16), which forms the flat base of the frame (12), sits on the outer edge (42) close to the inner edge (11). In this case, the upper wall (15) of the frame (12) and the upper wall (41) of the heat shield (40) are aligned in the same plane. On the other hand, the lower wall (16) of the frame (12) sits on the cooktop (1) near the outer edge (14). The outer edge 42 and the lower wall 16 are in the same plane.

The mushroom-shaped flame spreader (30) sits on the open mouth (53) of the burner body (50) in a removable way. A flat rim (32) forming the lower part of the cylindrical flame spreader (30) extends radially outwards and an air intake corridor (a) at a distance between them and the upper wall (41) limits the entrance. The rim part (32) reaches an inward channel (34) from which it is directed to a venturi element in the center. In the upper part of the flame spreader (30), the holes (36) separated by the tooth-shaped walls are covered by the metal cover (33). The support extension (24) at the upper end of the lifting arm (23) extends towards the cover (33) in a way that leaves a distance from the flame spreader. The rim (32) together with the channel (34) following it form the air intake corridor (a), which provides radial inward air movement between the heat shield (40) upper wall (41) and the lower part of the flame spreader (30). The air intake corridor (a) reaches the inner chamber (56) from one end and provides mixing of the flammable gas coming from the injector (60) with the ambient air. The gas-air mixture is taken out of the holes (36) and feeds the flame spreader formed by ignition.

The height of the outer edge (14) and the inner edge (11) of the frame (12) on the hob grill (10) is adjusted equally. In addition, the lower wall (16) and the upper wall (15) are adjusted equally to provide a rectangular section. The height of the outer edge (14) and the inner edge (11) is less than the width of the lower wall (16) and the upper wall (15). Since the inner edge (11) and the elevation part (44) have equal heights, when the single hob grill (10) is disposed on the hob (1) by wrapping around the burner body (50), it does not create any obstacle in front of the planar floor of the air intake corridor (a).

The carrier arms (20) fixed vertically on the frame (12) are manufactured by cutting from the same sheet metal as the frame (12). Therefore, the thickness of the carrier arms (20) and the height of the frame (12) are equal. The frame (12) and carrier arms (20) cut from a thin and flat metal sheet provide a light hob (10). On the other hand, the thin carrier arms (20) affect the air drawn from the ambient in the least way and have high combustion efficiency. is happening. The base (22) of the lifting arms (20) of the support arms (20) extends radially outward with respect to the center of the frame (12), providing an expanded support area together with the flat frame (12), and the support extension (24) is disposed on the glass cooktop when the pot sits on it unevenly. (1) by reducing the pressure, any damage is prevented.

### REFERENCE NUMBERS

1 Top plate
2 Apertures
10 Grate
11 Inner edge
12 Frame
14 Outside edge
15 Upper wall
16 Bottom wall
20 Support arm
21 Hole
22 Base
23 Lifter arm
24 Support extension
25 Mounting section
30 Flame spreader
32 Rim
33 Cover
34 Channels
35 Carrier chute
36 Holes
40 Heat shield
41 Upper wall
42 Outer edge
43 Mounting part
44 Elevation part
45 Aperture
50 Burner body
51 Flange
52 Mounting hole
53 Mouth
54 Outer wall
56 Inner chamber
60 Injector
62 Gas inlet
a Air intake corridor

## Claims

1. A gas hob comprising a cup-shaped burner body (50) disposed in an opening (2) on a top plate (1) and a flame spreader (30) extending radially outwardly on the burner body (50) so as to provide an air intake corridor (a) with the top plate (1); a grate (10) having a frame (12) that surrounds the burner body (50) at a distance and at least one carrier arm (20) rising from the frame (12) and extending towards the flame spreader (30); a flat heat shield (40) arranged as a spacer between the burner body (50) and the frame (12) **characterized in that** the frame (12) is in the form of a flat plate and thickness of the frame (12) surrounding the heat shield (40) from its periphery is arranged to equal or smaller than the height of the heat shield (40) wherein a flat upper wall (15) of the frame (12) of the grate (10) is aligned with the upper wall (41) of the heat shield (40) to extend in the same horizontal plane and a flat rim (32) forming the lower part of the cylindrical flame spreader (30) extends radially outwards to limit entrance of an air intake corridor (a) with the upper wall of the heat shield (41) wherein the air intake corridor (a) reaches the inner chamber (56) of the burner body from one end and provides mixing of the flammable gas coming from an injector (60) with the ambient air.

2. A gas hob according to claim 1, wherein a mounting section (25) at the bottom of the carrier arm (20) is extending from the top of the frame (12) to the outer edge (14) in an L-like form.

3. A gas hob according to claim 2, wherein a base (22) following the mounting section (25) gradually rests at least partially on the top plate (1).

4. A gas hob according to any one of the preceding claims, wherein the carrier arm (20) is in the form of a solid thin and flat plate rising perpendicular to the frame (12).

5. A gas hob according to claim 4, wherein the thickness of the carrier arm (20) is substantially equal to the thickness of the frame (12).

6. A gas hob according to any of the preceding claims, wherein a mounting part (43) of the heat shield (40) is aligned into a mounting hole (52) provided on a flange (51) of the burner body (50) extending to the opening (2) such that a fixing element is able to be inserted.

7. A gas hob according to any one of the preceding claims, wherein the heat shield (40) is having a stepped outer edge (42) fitted from a lower wall (16) to the frame (12) in a covering manner.

8. A gas hob according to claim 7, wherein an elevated portion (44) equal to the thickness of the frame (12) is provided between the outer edge (42) and the planar upper wall (41).

9. A gas hob according to any one of the preceding claims, wherein the heat shield (40) is formed from a metal plate.

10. A gas hob according to any of the preceding claims, wherein the hob (1) comprises ceramic or hardened glass.

## Patentansprüche

1. Ein Gas-Kochfeld, umfassend einen becherförmigen Brennerkörper (50), der in einer Öffnung (2) auf einer oberen Platte (1) angeordnet ist, und einen Flammenverteiler (30), der sich radial nach außen auf dem Brennerkörper (50) erstreckt, um mit der oberen Platte (1) einen Lufteinlasskorridor (a) zu bilden; einen Rost (10) mit einem Rahmen (12), der den Brennerkörper (50) in einem Abstand umgibt, und mindestens einem Trägerarm (20), der vom Rahmen (12) aufsteigt und sich in Richtung des Flammenverteilers (30) erstreckt; einen flachen Hitzeschild (40), der als Abstandshalter zwischen dem Brennerkörper (50) und dem Rahmen (12) angeordnet ist, **dadurch gekennzeichnet, dass** der Rahmen (12) in Form einer flachen Platte vorliegt und die Dicke des Rahmens (12), der den Hitzeschild (40) an dessen Peripherie umgibt, gleich oder kleiner als die Höhe des Hitzeschilds (40) ist, wobei eine flache obere Wand (15) des Rahmens (12) des Rosts (10) mit der oberen Wand (41) des Hitzeschilds (40) ausgerichtet ist, um in derselben horizontalen Ebene zu verlaufen, und ein flacher Rand (32), der den unteren Teil des zylindrischen Flammenverteilers (30) bildet, sich radial nach außen erstreckt, um den Eintritt eines Lufteinlasskorridors (a) mit der oberen Wand (41) des Hitzeschilds zu begrenzen, wobei der Lufteinlasskorridor (a) von einem Ende aus die innere Kammer (56) des Brennerkörpers erreicht und die Mischung des brennbaren Gases aus einer Einspritzdüse (60) mit der Umgebungsluft ermöglicht.

2. Ein Gas-Kochfeld nach Anspruch 1, wobei ein Montageabschnitt (25) am unteren Ende des Trägerarms (20) sich von der Oberseite des Rahmens (12) bis zur Außenkante (14) in L-ähnlicher Form erstreckt.

3. Ein Gas-Kochfeld nach Anspruch 2, wobei eine Basis (22), die dem Montageabschnitt (25) folgt, sich allmählich mindestens teilweise auf der oberen Platte (1) abstützt.

4. Ein Gas-Kochfeld nach einem der vorhergehenden Ansprüche, wobei der Trägerarm (20) in Form einer massiven, dünnen und flachen Platte senkrecht zum Rahmen (12) aufsteigt.

5. Ein Gas-Kochfeld nach Anspruch 4, wobei die Dicke des Trägerarms (20) im Wesentlichen der Dicke des Rahmens (12) entspricht.

6. Ein Gas-Kochfeld nach einem der vorhergehenden Ansprüche, wobei ein Montageabschnitt (43) des Hitzeschilds (40) in eine Montagelochung (52) einer Flansch (51) des Brennerkörpers (50) ausgerichtet ist, der sich bis zur Öffnung (2) erstreckt, sodass ein Befestigungselement eingefügt werden kann.

7. Ein Gas-Kochfeld nach einem der vorhergehenden Ansprüche, wobei der Hitzeschild (40) eine abgestufte Außenkante (42) aufweist, die sich in abdeckender Weise von einer unteren Wand (16) bis zum Rahmen (12) erstreckt.

8. Ein Gas-Kochfeld nach Anspruch 7, wobei ein erhöhter Abschnitt (44), der der Dicke des Rahmens (12) entspricht, zwischen der Außenkante (42) und der ebenen oberen Wand (41) vorgesehen ist.

9. Ein Gas-Kochfeld nach einem der vorhergehenden Ansprüche, wobei der Hitzeschild (40) aus einer Metallplatte geformt ist.

10. Ein Gas-Kochfeld nach einem der vorhergehenden Ansprüche, wobei das Kochfeld (1) aus Keramik oder gehärtetem Glas besteht.

## Revendications

1. Une plaque de cuisson à gaz comprenant un corps de brûleur en forme de coupe (50) disposé dans une ouverture (2) sur une plaque supérieure (1) et un répartiteur de flamme (30) s'étendant radialement vers l'extérieur sur le corps de brûleur (50) de manière à former un corridor d'admission d'air (a) avec la plaque supérieure (1) ; une grille (10) ayant un cadre (12) entourant le corps de brûleur (50) à une certaine distance et au moins un bras porteur (20) s'élevant depuis le cadre (12) et s'étendant vers le répartiteur de flamme (30) ; un écran thermique plat (40) agencé comme espaceur entre le corps de brûleur (50) et le cadre (12), **caractérisé en ce que** le cadre (12) est sous forme de plaque plate et que l'épaisseur du cadre (12) entourant l'écran thermique (40) sur sa périphérie est disposée de manière à être égale ou inférieure à la hauteur de l'écran thermique (40), dans lequel une paroi supérieure plate (15) du cadre (12) de la grille (10) est alignée avec la paroi supérieure (41) de l'écran thermique (40) pour s'étendre dans le même plan horizontal et un rebord plat (32) formant la partie inférieure du répartiteur de flamme cylindrique (30) s'étend radialement vers l'extérieur pour limiter l'entrée du corridor d'admission d'air (a) avec la paroi supérieure de l'écran thermique (41), dans lequel le corridor d'admission d'air (a) atteint la chambre intérieure (56) du corps de brûleur (50) par une extrémité et permet le mélange du gaz inflammable provenant d'un injecteur (60) avec l'air ambiant.

2. Une plaque de cuisson à gaz selon la revendication 1, dans laquelle une section de montage (25) située en bas du bras porteur (20) s'étend du haut du cadre (12) au bord extérieur (14) sous une forme en L.

3. Une plaque de cuisson à gaz selon la revendication 2, dans laquelle une base (22) suivant la section de montage (25) repose progressivement au moins partiellement sur la plaque supérieure (1).

4. Une plaque de cuisson à gaz selon l'une quelconque des revendications précédentes, dans laquelle le bras porteur (20) est sous forme d'une plaque mince et plate solide s'élevant perpendiculairement au cadre (12).

5. Une plaque de cuisson à gaz selon la revendication 4, dans laquelle l'épaisseur du bras porteur (20) est sensiblement égale à l'épaisseur du cadre (12).

6. Une plaque de cuisson à gaz selon l'une quelconque des revendications précédentes, dans laquelle une partie de montage (43) de l'écran thermique (40) est alignée dans un trou de montage (52) prévu sur une bride (51) du corps de brûleur (50) s'étendant jusqu'à l'ouverture (2) de manière à permettre l'insertion d'un élément de fixation.

7. Une plaque de cuisson à gaz selon l'une quelconque des revendications précédentes, dans laquelle l'écran thermique (40) présente un bord extérieur étagé (42) ajusté depuis une paroi inférieure (16) au cadre (12) d'une manière recouvrante.

8. Une plaque de cuisson à gaz selon la revendication 7, dans laquelle une portion surélevée (44) égale à l'épaisseur du cadre (12) est prévue entre le bord extérieur (42) et la paroi supérieure plane (41).

9. Une plaque de cuisson à gaz selon l'une quelconque des revendications précédentes, dans laquelle l'écran thermique (40) est formé à partir d'une plaque métallique.

10. Une plaque de cuisson à gaz selon l'une quelconque des revendications précédentes, dans laquelle la plaque de cuisson (1) comprend de la céramique ou du verre trempé.
